# EUROPEAN PATENT APPLICATION

(11) **EP 2 065 412 A1**
(43) Date of publication of application: **03.06.2009**
(21) Application number: 08020199.9
(22) Date of filing: 20.11.2008
(51) Int. Cl.: C08F 290/06, C08G 18/67, C08G 18/73, C09D 175/16, C08G 18/77, C08G 18/28

(54) **Ethylenically unsaturated polyisocyanate addition compounds based on lysine triisocyanate, their use in coating compositions and processes for their preparation**

(30) Priority: 29.11.2007 US 998381
(71) Applicant: Bayer MaterialScience LLC, Pittsburgh, PA 15205 (US)
(72) Inventor: Roesler, Richard R., PA 15090 Wexford (US); Venham, Lanny D., Oakdale PA 15071-9495 (US); Britsch, Catherine M., PA 15212 Pittsburgh (US); Gambino, Charles A., PA 15057 McDonald (US)
(74) Representative: Bramer-Weger, Elmar

(57) **Abstract**

This invention relates to ethylenically unsaturated polyisocyanate addition compounds and to coating compositions prepared from these ethylenically unsaturated polyisocyanate addition compounds. These ethylenically unsaturated polyisocyanate addition compounds resins comprise the reaction product of (a) lysine triisocyanate and (b) at least one hydroxy-functional (meth)acrylate.

## Description

### BACKGROUND OF THE INVENTION

This invention relates to ethylenically unsaturated polyisocyanate addition compounds based on lysine triisocyanate, to coating compositions prepared from these novel compounds, and to processes for their preparation.

In the past UV coatings were touted as being 100% solids. Unfortunately, in order to achieve the desired performance properties medium-high molecular weight acrylic functional oligomers with high viscosity were developed. These materials were too viscous to be used alone and were formulated with reactive diluents, which are low molecular weight esters of acrylic or methacrylic acid. These reactive diluents have an elevated risk of toxicity and are therefore not desired.

In recent efforts to reduce the reactive thinner content, solvent has been used to reduce the viscosity of the formulation, thus reducing the need for substantial amounts of reactive thinner. Of course some reactive thinner is still used in order not to exceed VOC limits and to moderate the properties of the film.

The market has repeatedly asked for lower viscosity oligomers in order to reduce the amount of reactive thinner and solvent. To this end there are several patents directed to specialty isocyanates, i.e., allophanates, which give materials with decreased viscosity. See U.S. Patent 5,739,251 and U.S. Patent 5,777,024.

DE 2,914,982 discloses hardenable compositions that include urethanes that are liquid at room temperature or are solid at room temperature and can be melted at below 60°C. These compositions are prepared by reacting esters of polyesters containing hydroxyl terminal groups with difunctional and/or polyfunctional, and optionally subsequently with monofunctional, isocyanatoalkyl and/or isocyanatoaryl compounds.

U.S. Patent 5,674,921 discloses urethane-acrylate prepolymers which are radiation curable. These urethane-acrylate prepolymers comprise the reaction product of: a) a urethane prepolymer of a polyisocyanate functional isocyanate and a hydrolysable oligomer of an anhydrous cyclic ester of an hydroxyl acid, and b) an hydroxyl acrylate or methacrylate in an amount sufficient for endtipping. Suitable prepolymers can be prepared from lysine triisocyanate and esters such as lactone monomers including lactide, glycolide, para-dioxane and trimethylene carbonate, with a preferred mixture being ε-caprolactone with either para-dioxane or lactide. These prepolymers are endtipped with, for example, hydroxyethyl (meth)acrylate. A reactive diluent may also be used to aid in curing and processing the urethane-acrylate prepolymer as the subsequent reaction with the acrylate may significantly increase the molecular weight, and thus, the viscosity of the urethane-acrylate prepolymer. Although the reported viscosities in the examples which contain lysine triisocyanate and a polycaprolactone diol are less than 1000 cp, these values are reported at higher temperatures (e.g. 30°C or 50°C), and the prepolymers contain 50 wt.% of a reactive diluent.

We have discovered that using lysine triisocyanate in ethylenically unsaturated polyisocyanate addition compounds and coating compositions prepared from these ethylenically unsaturated polyisocyanate addition compounds yields products having low viscosities while maintaining performance properties. These materials can be used to form tough, flexible films.

Advantages of the present invention include the ability to formulate coatings with no or low levels of hazardous, low molecular weight, reactive diluents and with no or low levels of solvents.

### SUMMARY OF THE INVENTION

This invention relates to ethylenically unsaturated polyisocyanate addition compounds, to coating compositions prepared from these ethylenically unsaturated polyisocyanate addition compounds, processes for their production and to a process of preparing a coated product.

The ethylenically unsaturated polyisocyanate addition compounds of the present invention comprise the reaction product of:
(a) lysine triisocyanate,
(b) at least one hydroxy-functional (meth)acrylate, and optionally,
(c) up to 30 hydroxyl equivalent %, based on the total hydroxyl equivalents of component (b) and (c), of a hydroxyl compound other than (b), which has a number average molecular weight of 32 to 400.

The process for preparing these ethylenically unsaturated polyisocyanate addition compounds comprises reacting
(a) lysine triisocyanate,
(b) at least one hydroxy-functional (meth)acrylate, and optionally,
(c) up to 30 hydroxyl equivalent %, based on the total hydroxyl equivalents of component (b) and (c), of a hydroxyl compound other than (b), which has a number average molecular weight of 32 to 400.

The present invention also relates to coating compositions prepared from these ethylenically unsaturated polyisocyanate addition compounds. The coating compositions comprise
(1) an ethylenically unsaturated polyisocyanate addition compound which comprises the reaction product of
   (a) lysine triisocyanate,
   (b) at least one hydroxyl-functional (meth)acrylate and, optionally,
   (c) up to 30 hydroxyl equivalent %, based on the total hydroxyl equivalents of components (b) and (c), of a hydroxyl compound other than (b), which has a number average molecular weight of 32 to 400;
(2) optionally, one or more reactive diluents;
(3) optionally, a solvent or solvent mixture; and
(4) optionally, other additives and/or auxiliary agents.

These coating compositions may be cured by any suitable method. Suitable methods include, for example, radiation curing, free-radical polymerization, air oxidation, etc. Depending on the type of curing, various additives and/or auxiliary agents may be included in the coating composition.

The present invention also relates to a process for preparing a coated product. This process comprises
(A) coating a substrate with a coating composition that comprises
   (1) an ethylenically unsaturated polyisocyanate addition compound which comprises the reaction product of
      (a) lysine triisocyanate,
      (b) at least one hydroxyl-functional (meth)acrylate, and, optionally,
      (c) up to 30 hydroxyl equivalent %, based on the total hydroxyl equivalents of components (b) and (c), of a hydroxyl compound other than (b), which has a number average molecular weight of 32 to 400;
   (2) optionally, one or more reactive diluents;
   (3) optionally, a solvent or solvent mixture; and
   (4) optionally, additives and/or auxiliary agents; and
(B) curing the coating.

This invention also relates to coated products prepared by the above process.

### DETAILED DESCRIPTION OF THE INVENTION

Other than in the operating examples, or where otherwise indicated, all numbers or expressions referring to quantities of ingredients, reaction conditions, etc. used in the specification and claims are to be understood as modified in all instances by the term "about." As used herein, the term "(meth)acrylic" and "(meth)acrylate" are meant to include both acrylic and methacrylic acid derivatives, such as the corresponding alkyl esters often referred to as acrylates and (meth)acrylates, which the term "(meth)acrylate is meant to encompass.

Molecular weight values recited in the instant application can be determined by gel permeation chromatography using polystyrene or sulfonated polystyrene standards. In this case of Mₙ, the values can alternatively be determined by titrating functional groups using titration methods known in the art.

As used herein, the term ethylenically unsaturated polyisocyanate addition compounds may also be referred to as ethylenically unsaturated polyisocyanate addition resins, ethylenically usaturated polyurethane resins or ethylenically unsaturated resins or resins.

The term "curing" as used herein encompasses any known curing method which toughens or hardens the raw material by crosslinking into a finished material. This includes, but is not limited to, heat, air (i.e. oxidation), radiation curing (including electron beam, ultra-violet, etc.), free-radical polymerization (including peroxide, azo, etc.), etc.

Lysine triisocyanate is defined herein as corresponding to the structure:

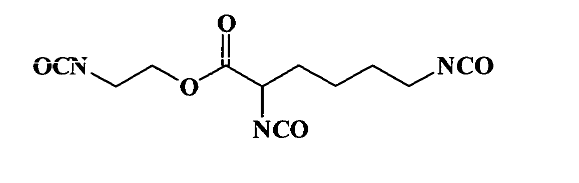

In accordance with the present invention, prepolymers of lysine triisocyanate, other chemical modifications of lysine triisocyanate such as biurets, allophanates, carbodiimides, etc., as well as residues of lysine triisocyanate are not desirable for component (a) of the present invention. This is due to the high viscosities which typically result from a modified lysine triisocyanate.

Suitable hydroxyl-functional (meth)acrylates to be used as component (b) in accordance with the present invention include for example, hydroxyethyl (meth)acrylate (HEA), hydroxypropyl (meth)acrylate (HPA), trimethylol propane di(meth)acrylate, pentaerythritol tri(meth)acrylate, GAMA ((meth)acrylic acid adduct of glycidyl (meth)acrylate), which can include the two isomers: CH₂ = CH - C(O) -O- CH₂ CH(OH)CH₂ - O -C(O) - C(CH₃)CH₂ and CH₂ = CH - C(O) - O - CH(CH₂OH)CH₂ - O - C(O) - C(CH₃)CH₂ or a polycaprolactone hydroxyethyl (meth)acrylate (PCHEA) can be used. PCHEA is available as Tone® M 100 from Dow Chemical Corp. However, any hydroxyl functional mono- or poly-functional (meth)acrylate can be used herein.

In the ethylenically unsaturated polyisocyanate addition compounds of the present invention, the amount of component (a) the lysine triisocyanate, on an isocyanate equivalent basis, is essentially equivalent to the amount of hydroxyl equivalents of hydroxyl containing materials in component (b) of the composition. It is also possible to either slightly under index or slightly over index the system, but this is less desirable as any excess lysine triisocyanate may react with mono- or polyol.

When an excess of lysine triisocyanate is used, other hydroxyl compounds may be used to react with any residual isocyanate functionality and include, for example, mono- to trihydric aliphatic aicohois having a number average molecular weight of 32 to 400, i.e. component (c) herein. Examples of such hydroxyl compounds include, but are not limited to methanol, ethanol, n-hexanol, isooctanol, isododecanol, benzyl alcohol, ethylene glycol, diethylene glycol, propylene glycol, 2-ethyl-1,3-hexane diol, glycerol and alcohols obtained from these alcohols by alkoxylation.

Thus, if component (c) is not present in the ethylenically unsaturated polyisocyanate addition compounds, then the NCO:OH equivalent ratio is about 1.0:1.0. However, if the ethylenically unsaturated resin additionally comprises component (c), then the NCO:OH equivalent ratio of components (a) and (b) may vary from 1.0:1.0 up to 1.45:1.0, preferably from 1.0:1.0 up to 1.35:1.0 and more preferably from 1.0:1.0 up to 1.25:1.0.

In addition, the ethylenically unsaturated polyisocyanate addition compounds or resins of the invention optionally comprise (d) one or more additives and/or auxiliary agents. Suitable additives and/or auxiliary agents include, for example, but are not limited to, free-radical polymerization stabilizers, catalysts, pigments, pigment dispersing agents, light absorbers, antioxidants, flow control additives, etc.

Suitable stabilizers which may optionally be used in the ethylenically unsaturated resins are typically free radical scavengers which prevent run-away polymerization reactions. Such compounds include, for example, butylated hydroxy toluene, hydroquinone, 2,6-di-t-butyl hydroquinone, methoxy phenol, etc.

Suitable catalysts which may optionally be used in the ethylenically unsaturated resins include the known urethane catalysts such as, for example, organometallic compounds as well as zinc catalysts and/or bismuth catalysts. Some examples of suitable organometallic compounds include dimethyltin dilaurate, dibutyltin dilaurate, dioctyltin dilaurate, dibutyltin diacetate, dibutyltin di-2-ethylhexoate, zinc octanoate, bismuth octanoate, etc.

Suitable pigments, light absorbers, antioxidants, etc. which are optionally present in the ethylenically unsaturated polyisocyanate addition compounds include those known in polyurethane chemistry.

These ethylenically unsaturated polyisocyanate addition compounds resins can be prepared by the reaction of (a) lysine triisocyanate, with (b) at least one hydroxyl-functional (meth)acrylate, in a suitable vessel, optionally in the presence of (c) up to 30 hydroxyl equivalent % of a hydroxyl compound other than component (b) that has a number average molecular weight of 32 to 400, and, optionally, (d) additives including a free-radical polymerization stabilizer, one or more catalysts, etc., with the reaction being run at a temperature sufficient for the reaction to occur in a reasonable time period.

The coating compositions of the invention comprise (1) the ethylenically unsaturated polyisocyanate addition compounds as described above, (2) optionally, one or more reactive diluents, (3) optionally, a solvent or solvent mixture, and (4) optionally, other additives and/or auxiliary agents. As above, the amount of lysine triisocyanate, on an isocyanate equivalent basis, is essentially equivalent to the amount of hydroxyl equivalents of hydroxyl containing materials in the composition. Coating compositions of the present invention may be cured by any suitable method. Examples of such methods include free-radical polymerization, radiation or by air.

These coating compositions may optionally include (2) one or more reactive diluents. Reactive diluents can be present in the composition in amounts ranging from 0 to 40%, in other cases from 0.1 to 40%, in some situations from 0.5 to 35%, in other situations from 1 to 35%, and in some instances from 1 to 25% by weight, based on the total weight of the ethylenically unsaturated resin and diluent.

Any suitably reactive diluent can be used in accordance with the present invention. Suitable reactive diluents include, but are not limited to, styrene, α-methylstyrene, para-methylstyrene, vinyltoluene, vinylpyrrolidone, vinylether, vinylester, divinylbenzene and alkyl mono-, di-tri- and tetra (meth)acrylates, wherein said alkyl is an alkyl group of, for example, from 1 to 8 carbon atoms.

The present composition can also optionally include (4) one or more solvents or solvent mixtures. If present in the composition, the amount of solvents present ranges from about 0% to about 95%, preferably from about 10% to about 85%, more preferably from about 15 to about 75%, more particularly preferred from about 20% to about 70%, and most preferred from about 25% to about 65% by weight, based on 100% by weight of the coating composition. As used herein, the coating composition includes both the solids and solvents present in the coating composition.

Non-limiting examples of suitable solvents that can be used in the curable coating composition include ether or hydrocarbon solvents, esters hydrocarbon solvents, a non-limiting example being butyl acetate, and those that have acrylic functionality, a non-limiting example being hexanediol diacrylate, acetone, butanone, tetrahydrofuran, dioxane, acetonitrile, dipropylene glycol dimethyl ether and 1-methyl-2-pyrrolidone.

Other suitable additives and auxiliary agents may also be present in the coating compositions of the present invention. These include, for example, photoinitiators, siccatives, light stabilizers, UV absorbers, antioxidants, fillers, anti-settling agents, antifoam agents, wetting agents, flow control agents, thixotropes, reactive thinners, plasticizers, thickeners, pigments, dyes, flatting agents and combinations thereof.

In accordance with the invention, suitable photoinitiators may be present in the coating composition in quantities of from 0 to 10%, preferably from 0.1 to 10%, more preferably from 0.1 to 5%, more particularly preferably from 0.5 to 5%, most preferably from 0.1 to 3%, and most particularly preferably from 0.1 to 2.5% by weight, based on 100% by weight of the ethylenically unsaturated resin and diluent.

Examples of suitable photoinitiators for the present coating composition include those known in the field of polyurethane coatings. Suitable photoinitiators include, but are not limited to monoacylphosphine oxide (MAPO), bis-acylphosphineoxides (BAPO), alpha-hydroxyketone, benzildimethyl ketal (BDK), benzophenone and derivatives thereof, non-limiting examples being diphenoxy benzophenone, halogenated and amino functional benzophenones, 2-hydroxy-2-methylphenol-1-propanone, fluorenone derivatives such as 2,2-diethoxyacetophenone, anthraquinone derivatives such as 2-benzyl-2-N, N-dimethylamino-1-(4-morpholinophenyl) butanone, zanthone derivatives such as halogenated acetophenone, thioxanthone derivatives such as sulfonyl chlorides of aromatic compounds, camphorquinone, acylphosphine oxides, bis-acyl phosphine oxides, benzyl, benzimidazoles, benzoin ethers such as benzoin isopropyl ether, and hydroxyalkyl phenones such as 1-phenyl-2-hydroxy-2-methylpropan-1-one. Suitable photoinitiators also include, but are not limited to those available under the tradenames DAROCURE® and IRGACURE® from Ciba Specialty Chemicals Corp., Tarrytown, N.Y.

Suitable initiators (or catalysts) for the present invention include, but are not limited to the known free-radical initiators, e.g., aliphatic azo compounds such as azodiisobutyronitrile, azo-bis-2-methylvaleronitrile, 1,1'-azo-bis-1-cyclohexanenitrile and alkyl 2,2'-azo-bis-isobutyrates; symmetrical diacyl peroxides such as acetyl, propionyl or butyryl peroxide, benzoyl peroxides substituted by bromo, nitro, methyl or methoxy groups, and lauryl peroxides; symmetrical peroxydicarbonates such as diethyl, diisopropyl, dicyclohexyl and dibenzoyl peroxydicarbonate; tert-butyl peroxy-2-ethylhexanoate and tert-butyl perbenzoate; hydroperoxides such as tert-butyl hydroperoxide and cumene hydroperoxide; and dialkyl peroxides such as dicumyl peroxide, tert-butyl cumyl peroxide or ditert-butyl peroxide.

The coating compositions according to the invention may also be cured at room temperature in the presence of siccatives and, optionally, (hydro)peroxides. Suitable siccatives are known and include metal salts, preferably cobalt or vanadium salts, of acids such as linseed oil fatty acids, tall oil fatty acids and soybean oil fatty acids; resinic acids such as abietic acid and naphthenic acid; acetic acid; isooctanoic acid; and inorganic acids such as hydrochloric acid and sulfuric acid. Cobalt and vanadium compounds which are soluble in the coating compositions and act as siccatives are particularly suitable and include salts of the acids mentioned above. The siccatives are generally used in the form of organic solutions in quantities such that the metal content is 0.0005 to 3% by weight, preferably 0.001 to 1% by weight, based on 100% of the combined weight of the ethylenically unsaturated resin and the reactive diluent. Siccatives may also be used with accerating additives such as aromatic or aliphatic amines. Examples include triethanol amine, 1,3-propane diamine, aniline and N-benzyl aniline, etc.

Examples of (hydro)peroxides include di-tert.-butyl peroxide, benzoyl peroxide, cyclohexanone peroxide, methyl ethyl ketone peroxide, acetyl acetone peroxide, dinonyl peroxide, bis-(4-tert.-butylcyclohexyl)-peroxydicarbonate, tert.-butyl hydroperoxide, cumene hydroperoxide, 2,5-dimethyl-hexane-2,5-hydroperoxide and diisopropyl benzene monohydroperoxide. The (hydro)peroxides are preferably used in quantities of about 1 to 10% by weight, based on 100% of the combined weight of the ethylenically unsaturated resin and the reactive diluent.

In one embodiment of the invention, the coating composition comprises:
(1) from about 20% to about 100%, preferably from about 30% to about 100%, and more preferably from about 40% to about 90% by weight of the ethylenically unsaturated polyisocyanate addition compound that comprises the reaction product of
   (a) lysine triisocyanate,
   (b) at least one hydroxyl-functional (meth)acrylate and
   (c) optionally, up to 30 hydroxyl equivalent %, based on the total hydroxyl equivalents of component (b) and (c), of a hydroxyl compound other than (b), which has a number average molecular weight of 32 to 400;
(2) from about 0% to about 25%, preferably from about 0% to about 20%, and more preferably from about 5% to about 15% by weight of reactive diluents; and
(3) from about 0% to about 70%, preferably from about 0% to about 50%, and more preferably from about 10% to 30% by weight of a solvent or solvent mixture, with the sum of the %'s by weight of (1), (2) and (3) totaling 100% by weight of the coating composition.

This coating composition can be used as is with curing by an electron beam, but may additionally comprise from about 0% to about 7%, preferably from about 0% to about 5%, and more preferably from about 0% to about 3% by weight of one or more photoinitiators as described above if UV/visible radiation is used for cure.

UV radiation refers to wavelengths of from about 250 to 365 nm, and visible radiation refers to wavelengths of from about 365 to 450. In addition to UV radiation, visible radiation is also useful with the right photoinitiators.

The present invention also provides a process for preparing a coated substrate that includes coating at least a portion of the substrate with the above-described coating composition and allowing the coating to cure on the substrate.

These coating compositions can be used to coat substrates of any kind, such as wood, plastics, leather, paper, textiles, glass, ceramics, plaster, masonry, metals and concrete. They may be applied by standard methods, such as spray coating, spread coating, flood coating, casting, dip coating, roll coaling. The coaling compositions may be dear or pigmented.

Coating compositions of the present invention may be cured by any known method. Preferred curing methods include, for example, exposure to air, free-radical polymerization, and radiation.

After the evaporation of any inert solvents used, the coatings may be crosslinked either by high-energy radiation, such as UV light, electron beams, or .gamma.-rays, by heating to elevated temperatures in the presence of peroxides or azo compounds, or by curing with metal salts of siccative acids and optionally (hydro)peroxides at either elevated temperatures or at temperatures of room temperature or below. When the coatings are crosslinked by UV irradiation, photoinitiators are added to the coating composition. When curing the coatings with an electron beam, the coating composition optionally includes a photoinitiator.

When curing the coating compositions at elevated temperatures, curing must be conducted in the presence of 0.1 % to 10%, preferably 0.1 % to 5% by weight, based on the total weight of the coating composition, of one or more suitable free-radical polymerization initiators such as, for example, one or more peroxides and/or azo compounds. Temperatures ranging from 80°C to 240°C, and preferably from 120°C to 160°C, are needed to cure the coating compositions at temperatures. Free radical polymerization with peroxide initiators may occur at temperatures as low as, for example 10°C, if suitable accelerators such as, for example, amine catalysts are included.

Suitable initiators include, but are not limited to the known free-radical initiators, e.g., aliphatic azo compounds such as azodiisobutyronitrile, azo-bis-2-methylvaleronitrile, 1,1'-azo-bis-1-cyclohexanenitrile and alkyl 2,2'-azo-bis-isobutyrates; symmetrical diacyl peroxides such as acetyl, propionyl or butyryl peroxide, benzoyl peroxides substituted by bromo, nitro, methyl or methoxy groups, and lauryl peroxides; symmetrical peroxydicarbonates such as diethyl, diisopropyl, dicyclohexyl and dibenzoyl peroxydicarbonate; tert-butyl peroxy-2-ethylhexanoate and tert-butyl perbenzoate; hydroperoxides such as tert-butyl hydroperoxide and cumene hydroperoxide; and dialkyl peroxides such as dicumyl peroxide, tert-butyl cumyl peroxide or di-tert-butyl peroxide.

The coating compositions according to the invention may also be cured at room temperature in the presence of siccatives and optionally (hydro)peroxides. Suitable siccatives are known and include metal salts, preferably cobalt or vanadium salts, of acids such as linseed oil fatty acids, tall oil fatty acids and soybean oil fatty acids; resinic acids such as abietic acid and naphthenic acid; acetic acid; isooctanoic acid; and inorganic acids such as hydrochloric acid and sulfuric acid. Cobalt and vanadium compounds which are soluble in the coating compositions and act as siccatives are particularly suitable and include salts of the acids mentioned above. The siccatives are generally used in the form of organic solutions in quantities such that the metal content is 0.0005 to 3% by weight, preferably 0.001 to 1% by weight, based on 100% of the combined weight of the ethylenically unsaturated resin and the reactive diluent. Siccatives may also be used with accerating additives such as aromatic or aliphatic amines. Examples include triethanol amine, 1,3-propane diamine, aniline and N-benzyl aniline, etc. Examples of (hydro)peroxides include di-tert.-butyl peroxide, benzoyl peroxide, cyclohexanone peroxide, methyl ethyl ketone peroxide, acetyl acetone peroxide, dinonyl peroxide, bis-(4-tert.-butylcyclohexyl)-peroxydicarbonate, tert.-butyl hydroperoxide, cumene hydroperoxide, 2,5-dimethyl-hexane-2,5-hydroperoxide and diisopropyl benzene monohydroperoxide. The (hydro)peroxides are preferably used in quantities of about 1 to 10% by weight, based on 100% of the combined weight of the ethylenically unsaturated resins and the reactive diluents.

In one particular embodiment, the resins are combined with one or more photoinitiators, mixed and optionally diluted with a solvent. The formulations are applied to a substrate as wet films having a thickness of from 1 to 15 mil. The wet film is then exposed to radiation for a period of time sufficient to cure the film.

In accordance with the present invention, the radiation can be UV radiation, visible light, electron beam radiation or combinations thereof.

In many instances, the radiation has a wavelength of at least 250 nm. In some cases, the radiation has a wavelength of from about 320 to about 450 nm.

The resulting coating films are tough, flexible films. As a non-limiting example, the coating films provided by the present invention have a pendulum hardness of at least 30 seconds, preferably at least 33 seconds, and more preferably at least 35 seconds. In addition, the coating films of the present invention have a pendulum hardness of less than or equal to 200, preferably less than or equal to 160 and more preferably less than or equal to 120 seconds. The pendulum hardness of the cured coating films may range between any combination of these upper and lower values, inclusive, e.g. at least 30 seconds to less than or equal to 200 seconds, preferably at least 33 seconds to less than or equal to 160 seconds, and more preferably at least 35 seconds and less than or equal to 120 seconds. The pendulum hardness of the cured coating film can be determined using ASTM D 4366-95 (Test Method A)-Standard Test Methods for hardness of Organic Coatings by Pendulum Damping Tests using a Koenig Hardness Instrument.

The present invention also provides substrates coated according to the above-described method.

The following examples further illustrate details for the preparation and use of the compositions of this invention. The invention, which is set forth in the foregoing disclosure, is not to be limited either in spirit or scope by these examples. Those skilled in the art will readily understand that known variations of the conditions and processes of the following preparative procedures can be used to prepare these compositions. Unless otherwise noted, all temperatures are decrees Celsius and aii parts and percentages are parts by weight and percentages by weight, respectively.

### EXAMPLES

The following raw materials were used in the examples:
- Isocyanate A:: lysine triisocyanate

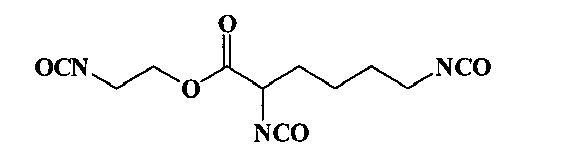

- Isocyanate B:: trimer of hexamethylene diisocyanate having a functionality of about 3.13 viscosity of about 1000 cps@25°C, containing about 1.98 mol/kg isocyanurate and having an NCO group content of about 24% by weight
- PCHEA:: (poly(ε-caprolactone) ester of 2-hydroxyethyl acrylate) with a hydroxyl equivalent weight of 344, and which is commercially available as Tone M 100 from DOW Chemicals.
- HEA:: hydroxyethyl acrylate with a hydroxyl equivalent weight of 116.1, and which is commercially available as HEA monomer from Dow Chemical Company
- HPA:: hydroxypropyl acrylate with a hydroxyl equivalent weight of 130.1, and which is commercially available as HPA monomer from Dow Chemical Company
- GAMA:: the acrylic acid adduct of glycidyl methacrylate (a hydroxyl functional diacrylate)
- EHD:: 2-ethyl hexanediol

### Preparation of GAMA was as follows:

Into a two liter round bottom flask fitted with stirrer, heater, dropping funnel and oxygen inlet tube were added 653 g (4.59 eq) glycidyl methacrylate, 3.5 g triphenyl phosphine catalyst and 1.0 g butylated hydroxy toluene stabilizer. The mixture was stirred until homogenous and heated to 70°C. To this mixture was added 345.5 (4.79 eq) acrylic acid over a one hour period. The reaction mixture was then heated to 90°C and held at this temperature for twelve hours until the acid number was 12.8 mg KOH/g resin. Then, an additional 1.0 g triphenyl phosphine was added. The reaction was held at 90°C an additional ten hours, until the acid number was 3.4 mg KOH/g resin. The final product (GAMA) had a viscosity of 64 mPa·sec at 25°C and a density of 9.5 lbs/gal ( = 1.1383511 g/cc).

### EXAMPLES

### Example 1: Preparation of lysine triisocyanate adduct of PCHEA,

### HEA and HPA:

Into a two liter round bottom flask fitted with stirrer, heater, dropping funnel and oxygen inlet tube were added 82.9g (0.930 eq) Isocyanate A (lysine triisocyanate), 160.2 g (0.465 eq) PCHEA, 27.3 g (0.232 eq) HEA, 30.6 g (0.232 eq) HPA and 1.5 g butylated hydroxy toluene stabilizer. The mixture was agitated until homogenous and then 1 g dibutyltin dilaurate catalyst were added. The reaction mixture was heated to 60°C and held at this temperature for six hours until no isocyanate was seen in an IR spectrum. The viscosity was 12,500 mPa·sec at 25°C and the density was 9.22 lbs/gal ( = 1.1047997 g/cc).

### Example 2: Preparation of lysine triisocyanate adduct of PCHEA:

Into a three liter round bottom flask fitted with stirrer, heater, dropping funnel and oxygen inlet tube were added 72.7 g (0.815 eq) lysine triisocyanate, 280.5 g (0.815 eq) PCHEA and 1.8 g butylated hydroxy toluene stabilizer. The mixture was agitated until homogenous and then 0.06 g dibutyltin dilaurate catalyst were added. The reaction mixture was then heated to 65°C and held at this temperature for six hours until no isocyanate was seen in an IR spectrum. The viscosity was 5,610 mPa·sec at 25°C and the density was 9.59 lbs/gal ( = 1.1491354 g/cc).

### Example 3: Preparation of lysine triisocyanate adduct of GAMA:

Into a two liter round bottom flask fitted with stirrer, heater, dropping funnel and oxygen inlet tube were added 83.2 g (0.989 eq) lysine triisocyanate, 211.9 g (0.989 eq) GAMA and 1.5 g butylated hydroxy toluene stabilizer. The mixture was agitated until homogenous and then 0.06 g dibutyltin dilaurate catalyst were added. The reaction mixture was heated to 60°C and held at this temperature for six hours until no isocyanate was seen in an IR spectrum. The viscosity was 1640 mPa·sec at 25°C and the density was 9.45 lbs/gal ( = 1.1323597 g/cc).

### Example 4: Preparation of lysine triisocyanate adduct of HEA, HPA and EHD:

Into a two liter round bottom flask fitted with stirrer, heater, dropping funnel and oxygen inlet tube were added 100.1g (1.124 eq) lysine triisocyanate, 74.0 g (0.637 eq) HEA, 35.5 g (0.273 eq) HPA, 80.0 g butyl acetate and 0.16 g butylated hydroxy toluene stabilizer. The mixture was agitated until homogenous and then 0.16 g dibutyltin dilaurate catalyst was added. The reaction mixture was then heated to 60°C and held at this temperature for six hours until the isocyanate was 2.38% NCO. Then, 10.1 g (0.17 eq) EHD was added and heating was continued for an additional four and one-half hours until no NCO was seen in an IR spectrum. The viscosity was 889 mPa·sec at 25°C and the density was 9.38 lbs/gal ( = 1.1239719 g/cc).

### Comparative Example 5: Preparation of Isocyanate B adduct of PCHEA:

Into a three liter round bottom flask fitted with stirrer, heater, dropping funnel and oxygen inlet tube were added 72.7 g (0.815 eq) Isocyanate B, 280.5 g (0.815 eq) PCHEA and 1.8 g butylated hydroxy toluene stabilizer. The mixture was agitated until homogenous and then 0.06 g dibutyltin dilaurate catalyst were added. The reaction mixture was then heated to 65°C and held at this temperature for six hours until no isocyanate was seen in an IR spectrum. The viscosity was 5,610 mPa·sec at 25°C and the density was 9.59 lbs/gal ( = 1.1491354 g/cc).

### Comparative Example 6: Preparation of Isocyanate B adduct of GAMA:

Into a two liter round bottom flask fitted with stirrer, heater, dropping funnel and oxygen inlet tube was added 469.7 g (2.52eq) Isocyanate B, 539.3 g (2.52 eq) GAMA and 5.0 g butylated hydroxy toluene stabilizer. The mixture was agitated until homogenous and then 0.06 g dibutyltin dilaurate catalyst were added. The reaction mixture was then heated to 60°C and held at this temperature for six hours until no isocyanate was seen in an IR spectrum. The resin diluted to 80% solids with 253.5 g n-butyl acetate. The viscosity was 3700 mPa·sec at 25°C and the density was 9.20 lbs/gal ( = 1.1024031 g/cc).

### Comparative Example 7: Preparation of Isocyanate B adduct of HEA, HPA and EHD:

Into a two liter round bottom flask fitted with stirrer, heater, dropping funnel and oxygen inlet tube was added 100.1 g (1.124 eq) Isocyanate B, 74.0 g (0.637 eq) HEA, 35.5 g (0.273 eq) HPA, 80.0 g butyl acetate and 0.16 g butylated hydroxy toluene stabilizer. The mixture was agitated until homogenous and then 0.16 g dibutyltin dilaurate catalyst were added. The reaction mixture was then heated to 60°C and held at this temperature for six hours until the isocyanate was 2.38% NCO. 10.1 g (0.17 eq) EHD was added and heating was continued for an additional four and one-half hours until no NCO was seen in an IR spectrum. The viscosity was 889 mPa·sec at 25°C and the density was 9.38 lbs/gal ( = 1.1239719 g/cc).

### Formulation of Radiation Curable coating Compositions:

Polyurethane formulations were prepared from the adducts described above in Examples 1-7 by mixing the adducts with 5 parts of Darocure 4265 (a photoinitiator) per hundred parts of adduct and 1 parts of Irgacure 184 (a photoinitiator) per hundred parts of adduct until homogenous, and then diluting with a sufficient quantity of n-butyl acetate to make solutions at 85% solids. The formulations are set forth in Table 1.

### Formulation, Cure Procedure and Testing:

The formulations were formed into films using a 4 mil wet film thickness draw down bar on both cold rolled steel panels for MEK double rub evaluations and glass panels for pendulum hardness evaluations. All panels were flashed for 30 seconds after draw down and cured for two minutes under a H&S Autoshot 400A Low Intensity UVA lamp at a lamp distance of 10 inches.

MEK double rubs was determined using a two pound ball peen hammer covered with several layers of cheesecloth. The cheesecloth was saturated with MEK. The MEK-wet hammer was placed on the coating surface such that the hammer is at a 90° angle to the surface. Without applying downward pressure, the hammer was pushed back and forth over approximately 4" long area of the coating. One forward and back motion is counted as one double-rub. The cloth was saturated with MEK after every twenty-five double rubs. The end-point was 100 double rubs or when the hammer broke through the substrate to the panel surface.

The pendulum hardness was determined using the (now withdrawn) ASTM D 4366-95 (Test Method A)-Standard Test Methods for hardness of Organic Coatings by Pendulum Damping Tests using a Koenig Hardness Instrument.

**TABLE 1: Coating Formulations**

| Coating Example | Coating 8 | Coating 9 | Coating 10 | Coating 11 | Coating 12 | Coating 13 | Coating 14 |
|---|---|---|---|---|---|---|---|
| Resin | Example 1/ 100 pbw | Example 2/ 100 pbw | Example 3/ 100 pbw | Example 4/ 100 pbw | Example 5/ 100 pbw | Example 6/ 100 pbw | Example 7/ 100 pbw |
| Darocure 4265 | 5 | 5 | 5 | 5 | 5 | 5 | 5 |
| Irgacure 184 | 1 | 1 | 1 | 1 | 1 | 1 | 1 |
| N-butyl acetate | 18.7 | 18.7 | 18.7 | 18.7 | 18.7 | 0 | 0 |

**TABLE 2: MEK Double Rubs - Performance Properties of Coatings 8-14**

| Coating Example | Coating 8 | Coating 9 | Coating 10 | Coating 11 | Coating 12 | Coating 13 | Coating 14 |
|---|---|---|---|---|---|---|---|
| Resin | Example 1 | Example 2 | Example 3 | Example 4 | Example 5 | Example 6 | Example 7 |
| Day 1 | 100 softened | 100 softened | 100 | 100 | 100 | 100 | 100 |
| Day 7 | 100 softened | 100 softened | 100 | 100 | 100 | 100 | 100 |
| Day14 | 100 softened | 100 softened | 100 | 100 | 100 | 100 | 100 |

**TABLE 3: Pendulum Hardness (sec) of Coatings 8-14**

| Coating Example | Coating 8 | Coating 9 | Coating 10 | Coating 11 | Coating 12 | Coating 13 | Coating 14 |
|---|---|---|---|---|---|---|---|
| Resin | Example 1 | Example 2 | Example 3 | Example 4 | Example 5 | Example 6 | Example 7 |
| Day 1 | 32 | 17 | 161 | 116 | 14 | 164 | 140 |
| Day 7 | 55 | 14 | 172 | 158 | 17 | 169 | 133 |
| Day 14 | 60 | 14 | 166 | 162 | 14 | 168 | 138 |

The data table shows that similar properties were seen with the new low viscosity products made with lysine triisocyanate as was seen with comparative products made with trimer triisocyanate. This was unexpected because the lysine triisocyanate has a flexible backbone and the trimer has a rigid ring structure.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. An ethylenically unsaturated polyisocyanate addition compound which comprises the reaction product of:
(a) lysine triisocyanate,
(b) at least one hydroxy-functional (meth)acrylate. and, optionally,
(c) up to 30 hydroxyl equivalent %, based on the total hydroxyl equivalents of component (b) and (c), of a hydroxyl compound other than (b), which has a number average molecular weight of 32 to 400.

2. The compound of Claim 1, additionally comprising at least one compound selected from the group consisting of: photoinitiators, siccatives, free-radical polymerization stabilizers, reactive diluents, antioxidants, light absorbers, pigments and catalysts.

3. The compound of Claim 1, wherein (b) is a compound selected from the group consisting of: hydroxyethyl (meth)acrylate, hydroxypropyl (meth)acrylate, trimethylol propane di(meth)acrylate, pentaerythritol tre(meth)acrylate, the (meth)acrylic acid adduct of glycidyl (meth)acrylate, polycaprolactone hydroxyethyl(meth)acrylate and mixtures thereof.

4. The compound of Claim 1, wherein (c) is a compound selected from the group consisting of: methanol, ethanol, n-hexanol, isooctanol, isododecanol, benzyl alcohol, ethylene glycol, diethylene glycol, propylene glycol, 2-ethyl-1,3-hexane diol, glycerol, mixtures thereof and alkoxylation products thereof.

5. A process for the preparation of ethylenically unsaturated polyisocyanate addition compounds comprising reacting:
(a) lysine triisocyanate, with
(b) at least one hydroxy-functional (meth)acrylate. and, optionally,
(c) up to 30 hydroxyl equivalent %, based on the total hydroxyl equivalents of component (b) and (c), of a hydroxyl compound other than (b), which has a number average molecular weight of 32 to 400.

6. A coating composition comprising:
(1) the ethylenically unsaturated polyisocyanate addition compound of Claim 1;
(2) optionally, one or more reactive diluents;
(3) optionally, one or more solvents or solvent mixtures; and
(4) optionally, one or more additives and/or auxiliary agents.

7. The coating composition of Claim 6, wherein (4) said one or more additives and/or auxiliary agents are selected from the group consisting of: photoinitiators, siccatives, light stabilizers, UV absorbers, antioxidants, fillers, anti-settling agents, antifoam agents, wetting agents, flow control agents, thixotropes, reactive thinners, plasticizers, thickeners, pigments, dyes, flattening agents and mixtures thereof.

8. A process for curing the coating compositions of Claim 6 by free-radical polymerization, air oxidation, or radiation.

9. A process for preparing a coated product comprising
(A) coating a substrate with a coating composition that comprises:
(1) the ethylenically unsaturated polyisocyanate addition compound of Claim 1;
(2) optionally, one or more reactive diluents;
(3) one or more solvents or solvent mixtures; and
(4) optionally, one or more additives or auxiliary agents; and
(B) curing the coating.

10. The process of Claim 9, wherein curing is by free-radical polymerization, air oxidation, or radiation.

11. The process of Claim 9, wherein said coating composition comprises (4) one or more additives or auxiliary agents which are selected from the group consisting of: photoinitiators, siccatives, light stabilizers, UV absorbers, antioxidants, fillers, anti-settling agents, antifoam agents, wetting agents, flow control agents, thixotropes, reactive thinners, plasticizers, thickeners, pigments, dyes, flattening agents and mixtures thereof.
